Europäisches Patentamt

European Patent Office

Office européen des brevets

(11) Publication number: **0 283 632**
**A1**

# (12) EUROPEAN PATENT APPLICATION

(21) Application number: **87830109.2**

(22) Date of filing: **20.03.87**

(51) Int. Cl.⁴: **H02K 44/08**

(43) Date of publication of application:
**28.09.88 Bulletin 88/39**

(84) Designated Contracting States:
**DE FR GB IT NL**

(71) Applicant: **ANSALDO SOCIETA per AZIONI**
**Piazza Carignano 2**
**Genoa(IT)**

(72) Inventor: **Avanzini, Pier Giulio, Dr.Ing.**
**Via A. Volta 27**
**I-16128 Genoa(IT)**

(74) Representative: **Galletti di San Cataldo, Vettor,**
**Dr. et al**
**Via XX Settembre 36**
**I-16121 Genova(IT)**

(54) Boiling liquid metal magnetohydrodynamic conversion system.

㊼ A boiling liquid metal magnetohydrodynamic system providing a hydraulic circuit (70, 71) along which a source of heat (1), a diffuser (3), a cold source (4), a magnetohydrodynamic generator (5) and a magnetohydrodynamic pump (6) are inserted.

In this system the fluid consists of the mixture of liquid metal and of the fraction of same vaporized by the source of heat (1).

Fig. 1

EP 0 283 632 A1

## Boiling liquid metal magnetohydrodynamic conversion system.

The subject-matter of this invention consists of a boiling liquid metal magnetohydrodynamic (MHD) system for the production of electric power.

The conversion of thermal energy into electric power by MHD systems is based on the interaction between a magnetic field and a conducting fluid, moving in a direction perpendicular to the magnetic field itself, in a duct which, in most cases, takes the shape of a straight channel.

This interaction gives rise, through the law of electromagnetic induction, to an electric field having a direction perpendicular to the plane identified by the speed and by the magnetic field; an electromotive force is associated with this electric field, and may be collected by electrodes located on the walls of the channel, perpendicular to the electric field; if these electrodes are connected to an external circuit there is circulation of current.

The fluid in which the MHD conversion takes place may be plasma (that is to say gas at a high temperature, in which the conductivity is increased by injection of ionizing salts), or a two-phase fluid consisting of a mixture of liquid metal and vapor or liquid metal and gas.

Plasma MHD systems may be of the open or closed cycle type, operating in a high temperature range (3000-2400° K for the open cycle and about 2000-1400° K for the closed cycle), and as a rule they are connected upstream from a conventional steam or gas powered plant, together with which they form a whole plant able to achieve very high overall performances of 48% and over.

Since at temperatures lower than 1000°K their operating fluids have a conductivity greater by several orders of size than that of a plasma, even ionized, liquid metal MHD (LMMHD) systems may be fed by sources of heat at lower temperatures (1500-800°K) and therefore appear to be suitable for feeding by various kinds of sources which may either of a conventional type (fossil fuels), or nuclear, solar or low enthalpy.

In these systems the gas, expanding, supplies motion to the metal with which it has been mixed and which therefore generates electric power; during the compression stage the gas and the metal run through separate circuits.

LMMHD energy conversion systems may be classified according to the following table :

Gravitational LMMHD : - Brayton
- Rankine

Non-gravitational LMMHD : - Binary
- Brayton
- Rankine
- Homogenous.

Boiling liquid metal MHD systems according to this invention differ from similar conversion systems based on the same principle for the following reasons :

First form of embodiment :

This system is of a single-phase type, and operates practically on the basis of a Rankine type cycle, in which the phases of expansion of the fluid which performs work and of MHD conversion in the channel, where only liquid metal circulates, take place in two separate organs (nozzle and MHD channel). This separation of the two organs is also present in systems already taken into consideration by other researchers (Ben Gurion University - Israel), where however the working fluid is a two-phase mixture of metal and gas and circulation of the fluid is due both to gravity and to the action of a compressor of the gas, while in the system proposed it is due solely to the action of an electromagnetic pump.

Second form of embodiment :

This system is characterized by the use of a centrifugation apparatus which separates the vapor phase from the liquid phase, so as to obtain circulation of current predominantly through the latter.

The system proposed is the only system using a two-phase flow LMMHD generator, where the resistance of the aeriform phase is bypassed.

A second typical feature of the system which should be mentioned is represented by the cylindrical form of the MHD channel, which simplifies implementation of the magnet.

The main characteristics of the invention are summarized and schematically illustrated in the claims; the aims and advantages thereof are also indicated in the following description concerning forms of embodiment chosen by way of example only with particular reference to the attached drawings, in which :

- figure 1 is a diagram of the principle of a magnetohydrodynamic (MHD) system in accordance with a first form of embodiment of the invention;

- figure 2 is an external view of a device which adopts the system according to the invention, in a different embodiment, as will be explained with reference also to the next figures;

- figure 3 is a cross-section of the device illustrated in figure 2, and shows in detail the system according to the invention;

-figure 4 is a cross-section of the plane IV-IV of figure 3.

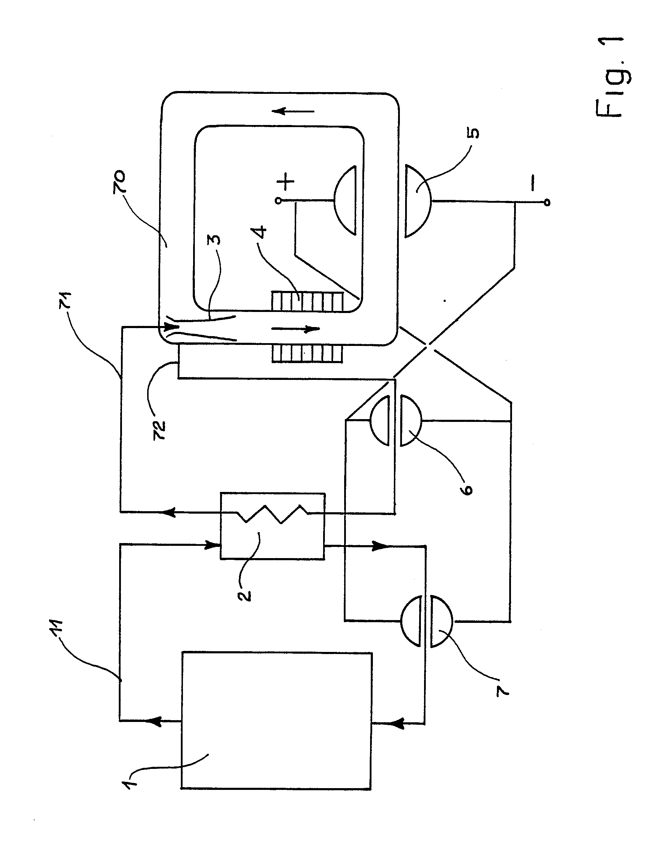

In figure 1, 1 indicates a fission reactor through which a primary fluid such as liquid lithium passes, heating up, and circulates in the closed circuit (11) in which a heat exchanger (2) is inserted which constitutes the source of heat for the secondary fluid, for example cesium.

Circulation of the primary fluid in the circuit (11) is ensured by the pump (7), consisting of a magnetohydrodynamic pump which uses part of the energy developed by the electric generator (5), also of the magnetohydrodynamic (MHD) type, inserted in the main hydraulic circuit (70) of the secondary fluid.

The secondary fluid main hydraulic circuit (70) consists of a closed circuit in which an expansion nozzle (3) is provided for the secondary fluid coming from the vapor generator (2) and previously bled from said hydraulic circuit.

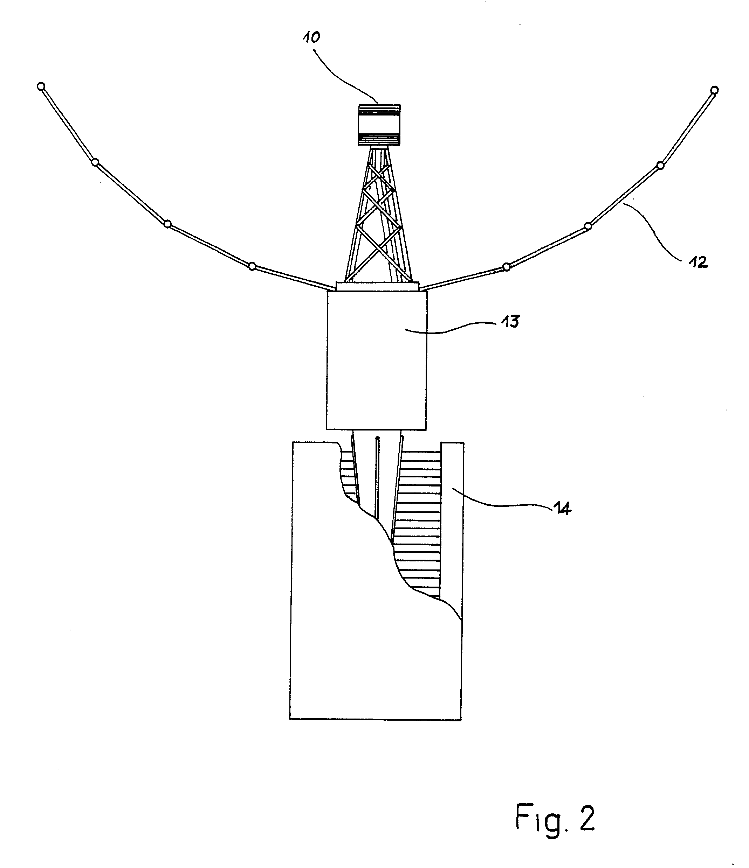

The liquid which constitutes the secondary fluid, for example cesium as already mentioned, is vaporized in the heat exchanger (2) by means of a source of heat, consisting for example of the primary fluid, arrives in the expansion nozzle (3) where it increases its kinetic energy, is condensed in the radiator (4) and finally passes through the MHD generator (5), which produces electric power, part of which is used to feed the pump (6) for compressing the cesium and the pump (7) for circulating the primary heat vector fluid, if the latter consists of a liquid metal, for example lithium, which may be used when the source of heat consists of a fast reactor (1), as shown in figure 1. With specific reference to figure 2, the number 10 indicates a collector-boiler on which the radiating heat collected by a heliostat (12) is concentrated.

13 indicates a liquid metal magnetohydrodynamic (LMMHD) generator as a whole, while 14 indicates a condenser radiator, for example of the heat-pipe type.

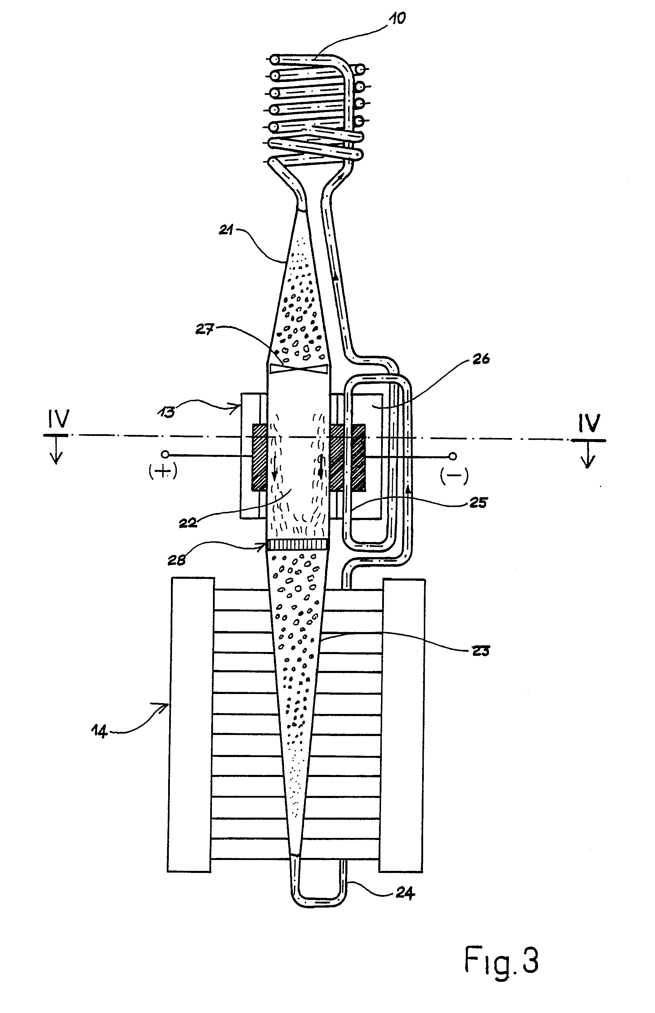

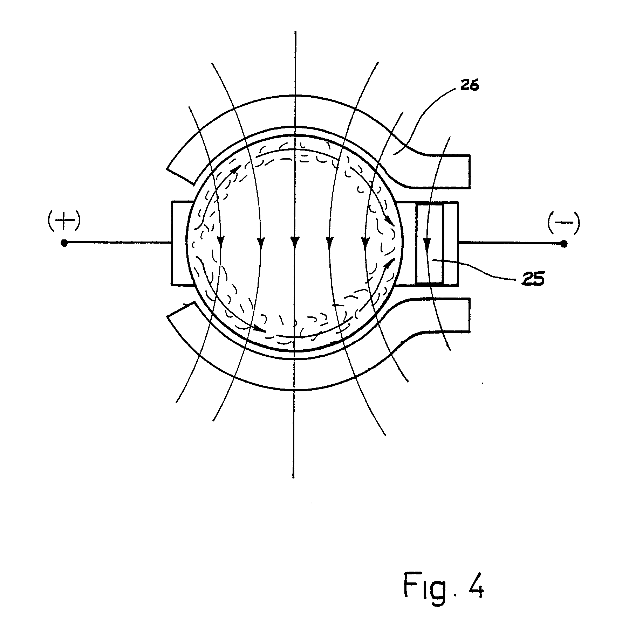

The second form of embodiment of the invention is in any case illustrated in greater detail in figures 3 and 4.

The collector-boiler (10) consists of a coil, the bottom end of which is connected to a diffuser (21) leading into a cylindrical body (22) which constitutes the channel of the MHD electric generator.

The latter is connected to a conical body (23) which is the condenser of the circuit, as it is surrounded by a heat exchanger (14).

The duct (24) which connects the bottom end of the condenser (23) to the collector-boiler (10) is wound into a coil (25) in the vicinity of the cylindrical body (22) and is surrounded by a magnetic field generated for example by a horseshoe magnet (26) which also encloses the duct (22). The ducts (22) and (23) are inserted in series in the distribution network.

Above the cylindrical part (22) there is a fan (27) and below this a mixer (28) is provided.

The solution illustrated in figures 2 and 4 is particularly suitable for feeding by a solar source : the liquid metal vaporizes partly in the boiler (10), the vapor expands in the diffuser (21) and the mixture acquires a rotary speed component thanks to the whirling device (27). Due to the centrifugal force and to the different densities of the phases of the mixture, this flows in practice split radially into its components in the MHD channel (22): the electric current circulates in it passing practically only through the liquid phase, as shown clearly in figure 4.

Below the channel (22), the mixture of the liquid phase with the vapor phase is reformed in a suitable mixer, and finally gives off heat to the low temperature heat source in the condenser-radiator (14).

Although for descriptive reasons this invention is based on the above description and drawings, many alterations and variations may be brought about in the embodiment of the invention. These alterations and variations shall however be deemed to be based on the claims listed below :

**Claims**

1) Liquid metal magnetohydrodynamic system characterized in that it includes a closed hydraulic circuit in which the following are inserted :
- a source of heat;
- a diffuser;
- a cold source acting as condenser;
- a magnet suitable for creating a magnetic field around an adequate portion of said hydraulic circuit;
- a pair of electrodes connected to said portion of the hydraulic circuit, so as to create an MHD type electric generator;
- a magnetohydrodynamic pump fed by said electric generator and included in a second portion of the hydraulic circuit;
and in which, furthermore, the fluid circulating in the hydraulic circuit between the source of heat and the condenser consists of the mixture of liquid metal and of the portion of same which was vaporized by the source of heat.

2) Magnetohydrodynamic system according to claim 1, characterized in that according to a first embodiment, the above mentioned hydraulic circuit has a main circuit closed into a ring in which the diffuser, the condenser and the (MHD) electric generator are included in series; in which there is also an auxiliary hydraulic circuit which originates from a small bleeder branch of the main circuit and in which an MHD type pump and the source of heat are included in series; in which said auxiliary circuit is inserted in the main circuit at the height of the throat of the above mentioned diffuser.

3) Magnetohydrodynamic system according to claim 1, characterized in that the MHD type electric generator is inserted between the diffuser and the condenser; in which, furthermore, below the diffuser and before said electric generator, there is a whirling apparatus which by means of the centrifugal force distributes the liquid phase in the form of a conducting ring along the walls of the duct, while the less conductive vapor phase remains in the central area of the duct.

4) Magnetohydrodynamic system according to claim 1, characterized in that a solar collector-boiler is used as the source of heat.

5) Magnetohydrodynamic system according to one or more of the previous claims, implemented and installed substantially according to the above descriptions and drawings.

Fig. 1

0 283 632

Fig. 2

Fig.3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 276 793 (BUTENUTH)<br>* Column 1, line 42 - column 3, line 10; figures 1,2 * | 1,2,5 | H 02 K 44/08 |
| Y | | 4 | |
| Y | US-A-4 191 901 (BRANOVER)<br>* Column 3, line 57 - column 4, line 12; figures 1,2 * | 4 | |
| X | DE-A-1 488 115 (BUTENUTH)<br>* Page 3, lines 9-31; figure 4 * | 1,3,5 | |
| A | DE-A-1 964 265 (M.B.B.)<br>* Page 3, line 18 - page 4, line 25; figures 1,2 * | 3 | TECHNICAL FIELDS SEARCHED (Int. Cl.4)<br><br>H 02 K |

The present search report has been drawn up for all claims

| Place of search | Date of completion of the search | Examiner |
|---|---|---|
| THE HAGUE | 10-11-1987 | TIO K.H. |